(19) Europäisches Patentamt
European Patent Office
Office européen des brevets

(11) EP 1 947 222 A1

(12) # EUROPEAN PATENT APPLICATION
published in accordance with Art. 158(3) EPC

(43) Date of publication:
**23.07.2008 Bulletin 2008/30**

(21) Application number: **06823278.4**

(22) Date of filing: **02.11.2006**

(51) Int Cl.:
***D01F 6/74*** *(2006.01)* ***C08G 73/18*** *(2006.01)*
***C08G 73/22*** *(2006.01)* ***D01F 6/60*** *(2006.01)*

(86) International application number:
**PCT/JP2006/322404**

(87) International publication number:
**WO 2007/052834 (10.05.2007 Gazette 2007/19)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.11.2005 JP 2005320608**

(71) Applicants:
- **Teijin Limited**
  **Osaka-shi, Osaka 541-0054 (JP)**
- **Teijin Techno Products Limited**
  **Osaka-shi,**
  **Osaka 541-0054 (JP)**

(72) Inventors:
- **CHOKAI, Masayuki**
  **Iwakuni-shi, Yamaguchi 740-0014 (JP)**
- **DE WEIJER, Anton Peter**
  **Iwakuni-shi, Yamaguchi 740-0014 (JP)**
- **HONDA, Susumu**
  **Iwakuni-shi, Yamaguchi 740-0014 (JP)**
- **KUWAHARA, Hiroaki**
  **Iwakuni-shi, Yamaguchi 740-0014 (JP)**
- **WILBERS, Dennis**
  **Iwakuni-shi, Yamaguchi 740-0014 (JP)**

(74) Representative: **Heimann, Anette**
**CPW GmbH**
**Patentabteilung**
**Kasinostrasse 19-21**
**42103 Wuppertal (DE)**

(54) **POLYAZOLE FIBER AND METHOD FOR PRODUCING SAME**

(57) This invention seeks to provide a fiber formed of an aromatic polyazole that has a high molecular weight and is excellent in mechanical properties such as elastic modulus, strength, etc., and a process for the production thereof.

This invention provides a fiber formed of a polyazole containing a recurring unit of the following formula (1),

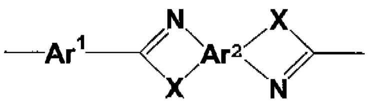

(I)

wherein $Ar^1$ is a divalent aromatic group having 4 to 20 carbon atoms, $Ar^2$ is a tetravalent aromatic group having 4 to 20 carbon atoms and each X is O, S or NH, and having a phosphorus atom content of 30 ppm or less, and a process for the production thereof.

EP 1 947 222 A1

## Description

Technical Field

This invention relates to a fiber formed of a polyazole and a process for the production thereof.

Technical Background

An aromatic polyazole is known as a polymer having excellent heat resistance, high strength, high elasticity and high chemical resistance. Various processes have been hitherto proposed for producing aromatic polyazoles.

For example, Patent Document 1 describes a process for producing an aromatic polyazole having a low molecular weight by a melt polymerization method.

Patent Document 2 describes a process for producing polybenzoxazole in the presence of polyphosphoric acid as a solvent. However, polyphosphoric acid has corrosiveness and an apparatus is hence required to use an expensive alloy having anti-corrosiveness. Further, phosphorus compounds such as polyphosphoric acid are difficult to remove from a polymer even by washing, and the defect with them is that they remain in a polymer and are liable to degrade properties of the polymer.

There have been also proposed processes that use a different solvent other than the phosphorus compound. For example, Patent Document 3 describes the production of a polybenzoxazole fiber, in which an aromatic polyamide having a hydroxyl group is prepared in the presence of an organic solvent, a fiber is spun from a reaction solution while the reaction solution contains the organic solvent and the aromatic polyamide, then the organic solvent is removed and a spun fiber is heated for ring-closing. However, the fiber obtained by using the reaction solution containing a low concentration of the aromatic polyamide cannot be satisfactory in mechanical properties.

Patent Document 4 describes the production of a polybenzoxazole by extruding a sodium hydroxide solution of an aromatic polyamide having a hydroxyl group into sulfuric acid to form an article and heating the formed article. In this process, however, the formed article is obtained by a neutralization reaction between an acid and an alkali, so that voids are generated in the obtained formed article, and it is difficult to obtain a formed article excellent in strength.

Further, as a finding with regard to a precursor of other polybenzoxazole, Non-Patent Document 1 describes that when a low-viscosity aromatic polyamide having a hydroxyl group is cyclized by dehydration, a film is improved in extensibility. Further, Patent Document 5 describes that a film of an aromatic polyamide having a hydroxyl group is molecular-oriented by applying a magnetic filed or electric field.

(Patent Document 1) US Patent 3,047,543
(Patent Document 2) JP-A 5-112639
(Patent Document 3) JP-B 43-2475
(Patent Document 4) UK Patent 1,142,071
(Patent Document 5) JP-A 2004-107621
(Non-Patent Document 1) J.H. Chang, K.M. Park, I.C. Lee, Polymer Bulletin, 2000,44,63

As described above, the process using, as a solvent, a phosphorus compound such as polyphosphoric acid enables the production of an aromatic polyazole having a high molecular weight. However, the defect thereof is that the phosphorus compound corrodes an apparatus and that a residual phosphorus compound in the polymer deteriorates the polymer.

On the other hand, there is known a process for the production of a fiber formed of a polybenzoxazole, in which an aromatic polyamide having a hydroxyl group is prepared in the presence of an organic solvent, a fiber is produced from a reaction solution containing a low concentration of the aromatic polyamide and the fiber is heated for ring closure. However, even when a non-crystalline solution containing a low concentration of an aromatic polyamide is used, it is difficult to obtain a fiber that is highly oriented and excellent in mechanical properties.

Disclosure of the Invention

It is therefore an object of this invention to provide a fiber that is formed of an aromatic polyazole and that is excellent in mechanical properties such as elastic modulus, strength and the like.

It is another object of this invention to provide a process for the production of a fiber formed of an aromatic polyazole without using any phosphorus compound such as polyphosphoric acid.

It is still another object of this invention to provide a process for the production of a fiber formed of an aromatic polyazole excellent in mechanical properties such as elastic modulus, strength and the like.

The present inventor has found that a fiber having excellent mechanical properties can be obtained by wet-spinning a fiber from an optically anisotropic dope containing a high concentration of a high-molecular-weight aromatic polyamide having a substituent such as a hydroxyl group or the like in an acidic solvent and heat treatment for the spun fiber, and this invention has been accordingly completed.

Further, the present inventor has found that when a dope for use in the production of a fiber formed of a polyazole contains an acidic solvent, the acidic solvent can be easily removed by washing with water and that there is hence little risk of its remaining in the fiber and the present invention was achieved by this finding.

This invention provides a fiber formed of a polyazole containing a recurring unit of the following formula (I),

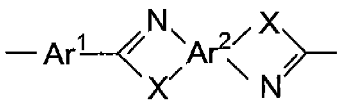 (I)

wherein $Ar^1$ is a divalent aromatic group having 4 to 20 carbon atoms, $Ar^2$ is a tetravalent aromatic group having 4 to 20 carbon atoms and each X is O, S or NH,
and having a phosphorus atom content of 30 ppm or less.

Further, this invention provides a process for the production of a fiber, which comprises spinning a fiber from a dope containing a polyamide and an acidic solvent and having a polyamide concentration of 5 % by weight or more, the polyamide containing a recurring unit of the following formula (I-a),

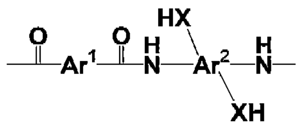 (I − a)

wherein $Ar^1$ is a divalent aromatic group having 4 to 20 carbon atoms, $Ar^2$ is a tetravalent aromatic group having 4 to 20 carbon atoms and each X is O, s or NH,
and having an inherent viscosity ($\eta_{inh}$) of 1 or more, coagulating the spun fiber in a coagulating liquid and heat-treating the thus-obtained fiber at 200 to 900°C.

Best Mode for Embodiment of the Invention

<Fiber>

The fiber of this invention is formed of a polyazole containing a recurring unit of the following formula (I).

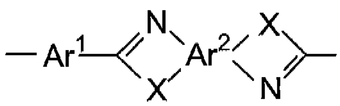 (I)

$Ar^1$ is a divalent aromatic group having 4 to 20 carbon atoms. $Ar^1$ includes a phenylene group, a naphthalene-diyl group and a divalent heterocyclic group. These may be substituted with a hydroxyl group, a halogen atom, or the like.

$Ar^1$ is preferably selected from the group consisting of

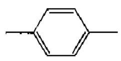 , 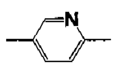 , 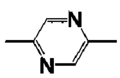 , 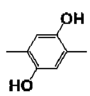

and

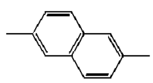 .

$Ar^2$ is a tetravalent aromatic group having 4 to 20 carbon atoms. $Ar^2$ includes a benzene-tetrayl group, a

naphthalene-tetrayl group, a biphenyl-tetrayl group and a tetravalent heterocyclic group. These may be substituted with a hydroxyl group, a halogen atom, or the like.

$Ar^2$ is preferably selected from the group consisting of

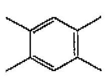 , 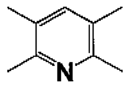 and 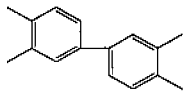 .

$Ar^2$ is particularly preferably a benzene-tetrayl group.

Each X is an oxygen atom (-O-), a sulfur atom (-S-) or an imino group (-NH-). The polyazole therefore includes an imidazole, a thiazole and an oxazole.

In the formula (I), preferably $Ar^1$ is

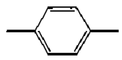 ,

$Ar^2$ is

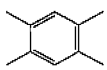 or 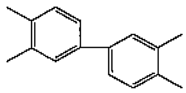

and each X is O.

The polyazole may contain, as a copolymer component, a recurring unit of the following formula (II) .

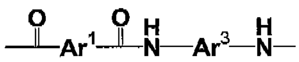 (I I)

In the formula (II), $Ar^1$ is a divalent aromatic group having 4 to 20 carbon atoms. $Ar^1$ preferably includes a phenylene group, a naphthalene-diyl group and a divalent heterocyclic group. These may be substituted with a hydroxyl group, a halogen atom, or the like.

$Ar^1$ is preferably selected from the group consisting of

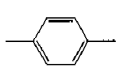 , 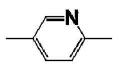 , 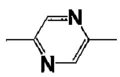 , 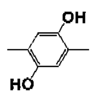

and

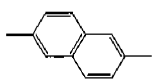 .

$Ar^3$ is a divalent aromatic group having 4 to 20 carbon atoms. $Ar^3$ includes a phenylene group, a naphthalene-diyl group and a divalent heterocyclic group. These may be substituted with a hydroxyl group, a halogen atom, or the like.

$Ar^3$ is preferably selected from the group consisting of

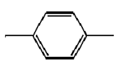 , 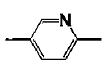 , 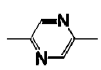

and

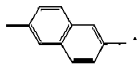

$Ar^3$ is preferably

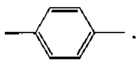

The polyazole is preferably formed of 5 to 100 mol% of the recurring unit of the formula (I) and 95 to 0 mol% of the recurring unit of the formula (II).

The polyazole is preferably formed of 10 to 100 mol% of the recurring unit of the formula (I) and 90 to 0 mol% of the recurring unit of the formula (II).

The polyazole is preferably formed of 50 to 100 mol% of the recurring unit of the formula (I) and 50 to 0 mol% of the recurring unit of the formula (II).

The inherent viscosity ($\eta_{inh}$) of the polyazole for constituting the fiber of this invention is 1.5 to 100, preferably 2.0 to 50, more preferably 3.0 to 40. The inherent viscosity ($\eta_{inh}$) of the polyazole refers to a value obtained by measurement of a polymer having a concentration of 0.03 g/100 mL in methanesulfonic acid at 30°C.

The phosphorus content in the polyazole (for) constituting the fiber of this invention is 30 ppm or less, preferably 0 to 20 ppm, more preferably 0 to 10 ppm.

The elastic modulus of the fiber of this invention is preferably 70 GPa or more, more preferably 100 to 500 GPa, still more preferably 120 to 350 GPa.

The single-fiber fineness of the fiber of this invention is preferably 0.01 to 100 dtex, more preferably 0.1 to 10 dtex, still more preferably 0.5 to 5 dtex.

The strength of the fiber of this invention is preferably 500 to 10,000 mN/tex, more preferably 1,000 to 5,000 mN/tex, still more preferably 1,200 to 4,000 mN/tex.

The elongation at break of the fiber of this invention is preferably 0.1 to 30 %, more preferably 0.5 to 10 %, still more preferably 1.0 to 8.0 %.

The fiber of this invention preferably has an orientation coefficient F, determined by the following expressions (III), of 0.3 or more.

$$<\cos^2\phi> = \frac{\int_0^{\pi/2} I(\phi)\cos^2\phi\sin\phi d\phi}{\int_0^{\pi/2} I(\phi)\sin\phi d\phi}$$

$$F = \frac{3<\cos^2\phi>-1}{2} \qquad \text{(III)}$$

Wherein $\phi$ is an azimuth angle in X-ray diffraction measurement and I is a diffraction intensity of X-ray. The orientation coefficient is more preferably 0.8 or more, still more preferably 0.9 or more, further more preferably 0.95 or more. With an increase in the value of the orientation coefficient F, the elastic modulus of the fiber increases, which is preferred. The upper limit of the theoretical orientation coefficient F in the case of complete orientation is 1.0.

<Process for the production of fiber>

The fiber of this invention can be produced by spinning a fiber from a dope containing a polyamide and an acidic solvent and having a polyamide concentration of 5 % by weight or more, the polyamide containing the recurring unit of the following formula (I-a) and having an inherent viscosity ($\eta_{inh}$) of 1 or more, then coagulating the spun fiber in a coagulating liquid and heat-treating the thus-obtained fiber at 200 to 900°C.

(Polyamide)

The polyamide contains the recurring unit of the following formula (I-a).

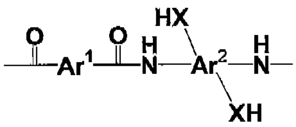 (I − a)

$Ar^1$ is a divalent aromatic group having 4 to 20 carbon atoms. $Ar^1$ includes a phenylene group, a naphthalene-diyl group and a divalent heterocyclic group. These may be substituted with a hydroxyl group, a halogen atom, or the like.

$Ar^1$ is preferably selected from the group consisting of

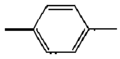 , 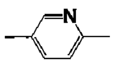 , 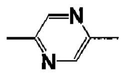 ,

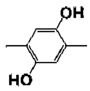 and 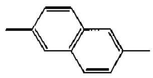 .

$Ar^2$ is a tetravalent aromatic group having 4 to 20 carbon atoms. $Ar^2$ includes a benzene-tetrayl group, a naphthalene-tetrayl group, a biphenyl-tetrayl group and a tetravalent heterocyclic group. These may be substituted with a hydroxyl group or a halogen atom.

$Ar^2$ is preferably selected from the group consisting of

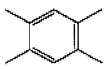 , 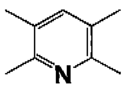 and 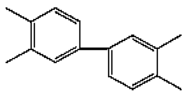 .

$Ar^2$ is particularly preferably a benzene-tetrayl group.

Each X is an oxygen atom (-O-), a sulfur atom (-S-) or an imino group (-NH-).

In the formula (I-a), preferably, $Ar^1$ is

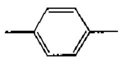 ,

$Ar^2$ is

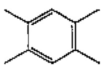 or 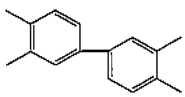

and each X is O.

A polyamide containing the following recurring unit is particularly preferred.

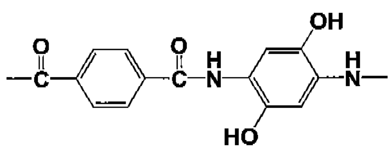

The polyamide may contain, as a copolymer component, a recurring unit of the following formula (II) .

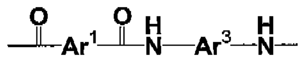 (I I)

In the formula (II), $Ar^1$ is a divalent aromatic group having 4 to 20 carbon atoms. $Ar^1$ includes a phenylene group, a naphthalene-diyl group and a divalent heterocyclic group. These may be substituted with a hydroxyl group, a halogen atom, or the like.

$Ar^1$ is preferably selected from the group consisting of

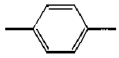 , 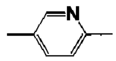 , 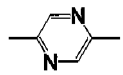 ,

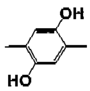 and 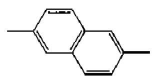 .

$Ar^3$ is a divalent aromatic group having 4 to 20 carbon atoms. $Ar^3$ includes a phenylene group, a naphthalene-diyl group and a divalent heterocyclic group. These may be substituted with a hydroxyl group, a halogen atom, or the like.

$Ar^3$ is preferably selected from the group consisting of

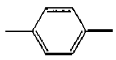 , 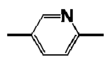 , 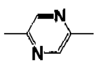

and

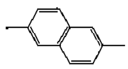 .

$Ar^3$ is preferably

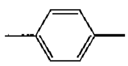 .

The polyamide preferably contains 5 to 100 mol% of the recurring unit of the formula (I-a) and 95 to 0 mol% of the recurring unit of the formula (II).

The polyamide preferably contains 10 to 100 mol% of the recurring unit of the formula (I-a) and 90 to 0 mol% of the recurring unit of the formula (II).

The polyamide preferably contains 50 to 100 mol% of the recurring unit of the formula (I-a) and 50 to 0 mol% of the recurring unit of the formula (II).

The inherent viscosity ($\eta_{inh}$) of the polyamide is 1 or more, more preferably 1.5 to 50, more preferably 3.0 to 10.0. The inherent viscosity of the polyamide refers to a value obtained by measurement of 0.5 g/dl of a polymer in a 95 wt% concentrated sulfuric acid at 30°C.

In this invention, the polyamide can be obtained by polymerizing a dicarboxylic acid compound of the following formula (A) with an aromatic diamine of the following formula (B) or a hydrochloride, sulfate or phosphate thereof. As an aromatic diamine, an aromatic diamine of the following formula (C) or a hydrochloride, sulfate or phosphate thereof may be further polymerized.

$$XOC\text{-}Ar^1\text{-}COX \qquad (A)$$

In the formula (A), $Ar^1$ is a divalent aromatic group having 4 to 20 carbon atoms. $Ar^1$ includes a phenylene group, a naphthalene-diyl group and a divalent heterocyclic group. These may be substituted with a hydroxyl group, a halogen atom, or the like.

$Ar^1$ is preferably selected from the group consisting of

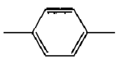 , 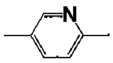 , 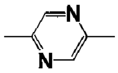 , 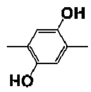

and

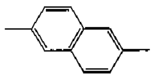.

Each X is -OH, a halogen atom or a group represented by -OR in which R is a monovalent aromatic group having 6 to 20 carbon atoms. The dicarboxylic acid compound is preferably an acid chloride that is a compound of the formula (A) in which each X = Cl.

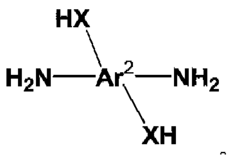 (B)

In the formula (B), $Ar^2$ is a tetravalent aromatic group having 4 to 20 carbon atoms. $Ar^2$ includes a benzene-tetrayl group, a naphthalene-tetrayl group, a biphenyl-tetrayl group and a tetravalent heterocyclic group. These may be substituted with a hydroxyl group, a halogen atom, or the like.

$Ar^2$ is preferably selected from the group consisting of

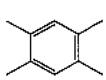 , 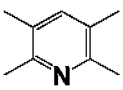 and 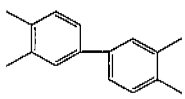.

$Ar^2$ is particularly preferably

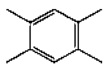.

$$H_2N\text{-}Ar^3\text{-}NH_2 \qquad (C)$$

In the formulae (C), $Ar^3$ is a divalent aromatic group having 4 to 20 carbon atoms. $Ar^3$ includes a phenylene group, a naphthalene-diyl group and a divalent heterocyclic group. These may be substituted with a hydroxyl group, a halogen atom, or the like.

$Ar^3$ is preferably selected from the group consisting of

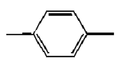 , 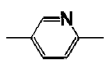 , 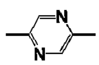

and

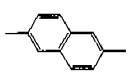.

$Ar^3$ is particularly preferably

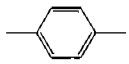 .

The solvent for the polymerization is not specially limited, and any solvent can be used so long as it dissolves the above monomers as raw materials, is substantially non-reactive with them and can serve to give a polymer whose inherent viscosity is preferably 1 or more, more preferably 1.2 or more. Examples of the solvent include amide-containing solvents such as N,N,N',N'-tetramethylurea (TMU), N,N-dimethylacetamide (DMAC), N,N-diethylacetamide (DEAC), N, N-dimethylpropionamide (DMPR), N,N-dimethylbutylamide (NMBA), N,N-dimethylisobutylamide (NMIB), N-methyl-2-pyrrolidinone (NMP), N-cyclohexyl-2-pyrrolidinone (NCP), N-ethylpyrrolidone-2 (NEP), N-methylcaprolactam (NMC), N, N-dimethylmethoxyacetamide, N-acetylpyrrolidine (NARP), N-acetylpiperidine, N-methylpiperidone-2 (NMPD), N,N'-dimethylethyleneurea, N,N'-dimethylpropyleneurea, N,N,N',N'-tetramethylmalonamide and N-acetylpyrrolidone, phenol-containing solvents such as p-chlorophenol, phenol, m-cresol, p-cresol and 2,4-dichlorophenol and mixtures of these. Of these, N,N-dimethylacetamide (DMAC) and N-methyl-2-pyrrolidinone (NMP) are preferred.

For improving solubility, a proper amount of a known inorganic salt may be added before, during or at the time of completion of the polymerization. The above inorganic salt includes, for example, lithium chloride, calcium chloride and the like.

The polyamide is produced from the above monomers (A), (B) and, preferably, further (C) in a solvent in the same manner as in the solution polymerization method of a general polyamide. As the above solvent, it is preferred to use a dehydrated solvent. The reaction temperature in this case is adjusted to 80°C or lower, preferably 60°C or lower. The concentration in this reaction, as a monomer concentration, is preferably 1 to 20 % by weight. In this invention, further, trialkylsilyl chloride can be used for increasing the polymerization degree of the polymer. Further, in a generally employed reaction of an acid chloride with a diamine, an aliphatic or aromatic amine or a quaternary ammonium salt may be used in combination for capturing an acid such as formed hydrogen chloride.

(Dope)

The dope of this invention contains the above polyamide in an amount of 5 % by weight or more, preferably 10 % by weight or more, more preferably 15 % by weight to 30 % by weight.

As a solvent, an acidic solvent is preferably used. The acidic solvent is preferably selected from fuming sulfuric acid, sulfuric acid, methanesulfonic acid or an aqueous solution of any one of these. As sulfuric acid, concentrated sulfuric acid having a concentration of 98 % by weight or more is preferred. These solvents may be used singly or in combination.

Further, the dope preferably exhibits optical anisotropy. This optical anisotropy refers, for example, to a state where the dope is sandwiched between two glass plates and observed under crossed Nicols through a microscope to show optical anisotropy.

The dope can be prepared by dissolving the polyamide in the acidic solvent. Further, it can be also prepared by bringing ice of sulfuric acid and the polyamide into contact with each other at a low temperature to obtain a sand-like dope and then kneading it to dissolve.

(Formation of fiber)

The dope is extruded through a spinneret to spin a fiber. The spinneret is preferably an anti-corrosive spinneret formed of gold, platinum, palladium, rhodium or an alloy of some of these.

The spun fiber is coagulated in a coagulating liquid. The coagulating liquid is preferably an aqueous solution of sulfuric acid or methanesulfonic acid or water. The temperature of the coagulating liquid is preferably -30 to 150°C, more preferably 0 to 100°C, further more preferably 5 to 50°C.

The spun fiber is preferably drawn before its coagulation in the coagulating liquid. The drawing is preferably carried out in the portion of an air gap. The air gap refers to a space provided between the spinneret and the coagulating liquid. When the dope is extruded through nozzles of the spinneret, a liquid crystal domain is oriented in the flow direction due to shearing in the nozzles, while the orientation of the liquid crystal domain becomes turbulent at outlets of the nozzles due to viscoelastic properties of the dope. The drawing in the air gap portion hence makes a recovery from the above turbulence. Since the fiber is drawn and rendered thin due to a tension, the recovery from the turbulence of the orientation can be easily accomplished.

The drawing ratio is preferably 1.5 to 300 times, more preferably 2.0 to 100 times, still more preferably 3.0 to 30 times. The draw ratio is calculated on the basis of a ratio of a discharge rate of the dope from the spinneret and a take-up rate of a coagulated fiber.

Then, preferably, washing, neutralization, washing and drying are carried out.

(Heat treatment)

In this invention, the thus-obtained fiber is heat-treated at 200 to 900°C. The temperature for the heat treatment is preferably 250 to 700°C, more preferably 300 to 550°C. The heat treatment can be carried out in an inert atmosphere such as an atmosphere of air, nitrogen or argon.
By the heat treatment, -XH groups substituted on $Ar^2$ and amide bonds in the formula (I-a) undergo a cyclization reaction, and a polyazole having the structure of the formula (1) can be obtained.
Further, the heat treatment is preferably carried out under tension. The tension that is applied during the heat treatment is preferably 0.1 to 80 %, more preferably 1 to 30 %, based on a breaking strength that the fiber has before the heat treatment. The time period for the heat treatment is preferably 0.01 to 1,800 seconds, more preferably 0.1 to 600 seconds, still more preferably 1 to 300 seconds.

Example

This invention will be explained more specifically with reference to Examples below. However, this invention shall not be limited to these Examples.
Physical properties in Examples were measured by the following methods.

(1) Inherent viscosity ($\eta_{inh}$)

A polyamide was measured for an inherent viscosity ($\eta_{inh}$) with regard to a polymer concentration of 0.5 g/dl in 95 wt% concentrated sulfuric acid at 30°C. A polyazole was measured for an inherent viscosity ($\eta_{inh}$) with regard to a polymer concentration of 0.03 g/100 mL in methanesulfonic acid at 30°C.

(2) Tni

Tni refers to the point of transition from optical anisotropy to optical isotropy. Optical anisotropy was observed through a polarizing microscope having a heat generator, and a point of 50 % phase transition was taken as Tni. The heating rate was set at 5°C/minute, and the measurement was made three times to obtain average measurement data.

(3) Strength, elongation at break and elastic modulus

A single fiber was measured for strength, an elongation at break and an elastic modulus with a TESNSILON universal tester 1225A supplied by ORIENTEC Co., LTD., by drawing at a tensile rate of 10 mm/min.

(4) Method of measurement of phosphorus atom content

A sample was placed in a wet decomposition vessel with a reflux condenser, concentrated sulfuric acid was added and then, with heating, nitric acid was dropwise added so gradually as not to dissipate any sample portion to completely decompose an organic material. After a decomposition product was allowed to cool, pure water was added, and a constant volume of the decomposition product was placed in a white transparent glass vessel, followed by quantitative determination of phosphorus atoms by ICP emission spectrometry.

(5) X-ray diffraction measurement

Measurement was made with an X-ray generator (RU-B type, supplied by Rigaku Corporation) using a target CuKα ray under conditions of a voltage of 45 kv and a current of 70 mA. Incidence X ray was focused and monochromatized with a multi-layer mirror supplied by Osmic, Inc. and the cross section of a sample was measured by a perpendicular transmission method. Diffraction X ray was detected with an imaging plate having a size of 200 mm x 250 mm (supplied by Fuji Photo Film Co., Ltd.) under a condition of a camera length of 250 mm.

Example 1

This Example describes a specific embodiment of a fiber that uses poly-p-dihydroxy-biphenylene terephtalamide (100 mol%) as a starting polyamide.

(Synthesis of polyamide)

16.016 Grams of a $CaCl_2$ powder was charged into a 500 ml round-bottom flask. The flask was heated at 250°C for 30 minutes to remove residual water. The flask was cooled to room temperature, and then 300 ml of N-methyl-2-pyrrolidone (to be sometimes referred to as "NMP" hereinafter) was added. After the $CaCl_2$ was completely dissolved in NMP, 10 g (0.046245 mol) of 3,3'-dihydroxybenzidine (supplied by Wako-Purechemical Ind., Co., Ltd.) was added while the above NMP solution was stirred. After the 3,3'-dihydroxybenzidine was dissolved, the above flask was cooled to 0°C in an ice bath. With energetically stirring, 9.38864 g (0.046245 mol) of terephthaloyl chloride was added at once. The resultant solution was held at 0°C for 2 hours. The solution became a heavily viscous solution. This viscous solution was heated and maintained at 70°C for 1 and a half hours. 3.426 Grams of $Ca(OH)_2$ (0.046245 mol) was added to neutralize a dope. The dope was placed in water and the mixture was stirred with a blender at a high speed.
While a polymer obtained by precipitation was stirred with the blender, it was washed with water three times, washed with ethanol and acetone once each and filtered with a Buchner funnel formed of a coarse sintered glass to isolate the polymer. The polymer was dried overnight in a vacuum oven at approximately 60°C. The thus-obtained polyamide had an inherent viscosity ($\eta_{inh}$) of 3.4.

(Preparation of dope)

6 Grams of the thus-obtained poly-p-dihydroxy-biphenylene terephthalamide was charged into a dry round-bottom flask having a mechanical stirrer made of stainless steel. The flask was heated up to 100°C in vacuum for 30 minutes to remove residual water. The flask was cooled to approximately -10°C and then 34 g of anhydrous sulfuric acid was added with energetically stirring. The mixture was held at this temperature for several hours. At intervals of a constant time period, this solution was observed with an optical microscope to monitor a dissolved state. After 95 % of polymer particles are dissolved, the above solution was heated up to 70°C for dissolving particles, and the solution was stirred for 40 minutes to obtain a homogenous solution. The thus-obtained dope was observed under crossed Nicols through a microscope to exhibit optical anisotropy. The temperature Tni at which the dope became optically isotropic was 122°C.

(Formation of fiber)

The thus-obtained dope was transferred into a cylinder and heated to a temperature close to its melting temperature under reduced pressure with degassing. The dope was extruded from a thin metal spinneret having a hole having a diameter of 90 μm into a coagulating liquid that was water at 25°C, with a mechanically driven syringe. A yarn was caused to pass through the coagulating liquid by 30 cm, then withdrawn from the water at an angle of 45 degrees and taken up with an electrically driven take-up machine. The yarn was taken up around a bobbin made of stainless steel at 20 m/minute, washed with cold flowing water on the bobbin for 3 hours and dried under vacuum at room temperature.

(Heat treatment)

The spun and dry poly-p-dihydroxy-biphenyleneterephthalamide yarn was wound around a rigid metal frame and heated at 450°C for 5 minutes. It was identified by IR spectrum that the chemical structure of the yarn that had the color of dark red was that of benzoxazole. In TGA analysis (measurement at a temperature elevation rate of 10°C/minute in a nitrogen atmosphere) of a spinning precursor fiber, a maximum weight loss rate was observed around 410°C and a stable region was observed between 450 and 610°C. A weight loss by cyclization, obtained by measurement, was 10.8 %, and this value was close to a theoretical value of 10.5 %. This shows that the conversion proceeded in a quantitative manner. The decomposition start temperature was 630°C (5 % weight loss). The thus-obtained fiber had an inherent viscosity ($\eta_{inh}$) of 7.8 and a phosphorus atom content of 10 ppm.

Example 2

This Example describes a specific embodiment of a fiber that uses a copolyamide of poly-p-dihydroxy-biphenyleneterephthalamide (15 mol%) and poly-p-phenyleneterephthalamide (85 mol%) as a starting polyamide.

(Synthesis of copolyamide)

264.5 Grams of a $CaCl_2$ powder was charged into a 5,000 ml round-bottom flask. The flask was heated at 250°C for 30 minutes to remove residual water. The flask was cooled to room temperature, and then 2,800 ml of N-methyl-2-pyrrolidone was added. $CaCl_2$ was completely dissolved in NMP, and then, while the NMP solution was stirred,

25 g (0.1156 mol) of 3,3'-dihydroxybenzidine (to be sometimes referred to as "DHB" hereinafter)(supplied by Wako-Purechemical Ind., Co., Ltd.) and 70.8464 g (0.6651 mol) of p-phenylenediamine were added. After the diamines were dissolved, the flask was cooled to 0°C in an ice bath. With energetically stirring, 156.4773 g (0.77075 mol) of terephthaloyl chloride was added at once. The resultant solution was maintained at 0°C for 2 hours. The solution became a heavily viscous solution. This viscous solution was heated and maintained at 70°C for 2 hours. The solution finally formed a rubber-like mass that had such a high viscosity that it could not be clearly stirred. This solution was placed in water for coagulation, and the mixture was stirred with a blender at a high speed. While a polymer obtained by precipitation was stirred with the blender, it was washed with water three times, washed with ethanol and acetone once each and filtered with a Buchner funnel formed of a coarse sintered glass to isolate the polymer. The polymer was dried overnight in a vacuum oven at approximately 60°C. The thus-obtained polyamide had an inherent viscosity ($\eta_{inh}$) of 4.1.

(Preparation of dope)

The thus-obtained copolyamide was dissolved in 99.8 % sulfuric acid to give a dope containing 18 % by weight of the copolyamide and 82 % by weight of sulfuric acid.

(Formation of fiber)

A fiber was spun from the dope through an anti-corrosive spinneret (made of metal that mainly contained platinum) at 85°C. As the spinneret, there was used a spinneret having 51 discharge nozzles having a diameter of 75 μm each. The extruded dope was caused to pass a 10 mm wide air gap at a draw ratio of 7.4 and coagulated in water. The coagulating bath had a temperature of 40°C. The thus-obtained fiber was washed with water at a room temperature for 5 seconds and neutralized with a 0.8 wt% sodium hydroxide aqueous solution. And then the fiber was washed with water at a room temperature for 5 seconds and dried at 160°C. The thus-obtained fiber was measured for mechanical properties to show that it had a single fiber fineness of 1.86 dtex, a strength of 1,474 mN/tex, an elongation at break of 4.4 % and an elastic modulus of 64 GPa.

(Heat treatment of fiber)

The thus-obtained fiber was caused to pass the inside of an oven which inside was continuously fed with nitrogen and heated at 450°C. A tension was applied to the fiber while the speeds of godet rollers before and after the oven were made different. The tension was maintained at 0.32 cN/dtex. The time period for which the fiber passed through the oven was 90 seconds. The thus-obtained fiber was measured for mechanical properties to show a single fiber fineness of 1.67 dtex, a strength of 2,035 mN/tex, an elongation at break of 3.3 %, an elastic modulus of 80 GPa and an orientation coefficient of 0.97. The fiber obtained had an inherent viscosity ($\eta_{inh}$) of 4.8 and a phosphorus atom content of 7 ppm.

Example 3

This Example describes a specific embodiment of a fiber that uses a copolyamide of poly-p-dihydroxy-phenyleneterephthalamide (OH-PPTA) (15 mol%) and poly-p-phenyleneterephthalamide (PPTA) (85 mol%) as starting polyamides.

(Synthesis of copolyamide)

22.8 Parts by weight of calcium chloride was dried under nitrogen current in a flask at 250°C fr 1 hour, the temperature inside the flask was adjusted back to room temperature and then 250 parts by weight of N-methyl-2-pyrrolidinone (NMP) was added. 3 Parts by weight of 2,5-diaminc-1,4-hydroquinone dichloride and 8.628 parts by weight of p-phenylenediamine were added, and 2.227 parts by weight of pyridine was added and dissolved therein. This solution was maintained at -10°C by external cooling, 19.057 parts by weight of terephthalic acid chloride was added, and the mixture was allowed to react at -10°C for 1 hour and at 80°C for 2 hours to complete the reaction.

After completion of the reaction, the reaction mixture was poured into a large amount of ion-exchanged water to precipitate a polymer. The resultant polymer was recovered by filtering, further washed with ethanol and acetone and vacuum-dried.

When the above polymer was dissolved in concentrated sulfuric acid so as to have a concentration of 15 % by weight, it formed a solution having a very high viscosity. The thus-obtained solution was observed under crossed Nicols through a microscope to exhibit optical anisotropy at 50°C. The copolyamide obtained had an inherent viscosity ($\eta_{inh}$) of 3.4.

(Preparation of dope)

The thus-obtained copolyamide was dissolved in 99.8 % sulfuric acid to give a dope containing 18 % by weight of the copolyamide and 82 % by weight of sulfuric acid.

(Formation of fiber)

A dope was spun through an ant-corrosive spinneret (made of metal that mainly contained platinum) at 85°C. The spinneret had 51 discharge nozzles having a diameter of 75 μm each. The extruded dope was caused to pass a 10 mm wide air gap at a draw ratio of 5.4 and coagulated in water. The coagulating bath had a temperature of 40°C. The thus-obtained fiber was washed with water at a room temperature for 5 seconds and neutralized with a 0.8 wt% sodium hydroxide aqueous solution. And then the fiber was washed with water for 5 seconds and dried at 160°C. The thus-obtained fiber was measured for mechanical properties to show that it had a single fiber fineness of 2.82 dtex, a strength of 1,340 mN/tex and an elastic modulus of 73 GPa.

(Heat treatment of fiber)

The thus-obtained fiber was caused to pass the inside of an oven which inside was continuously fed with nitrogen and heated. A tension was applied to the fiber while the speeds of godet rollers before and after the oven were made different. The heat treatment was carried out under conditions shown in Table 1 in which the temperature of the oven, the tension and the time period for which the fiber passed were changed. A fiber as sample No. 6 had an inherent viscosity ($\eta_{inh}$) of 6.97. The fiber obtained had a phosphorus atom content of 6 ppm. The thus-obtained fibers were measured for mechanical properties and Table 1 shows the results.

Table 1

| Sample No. | Temperature (°C) | Tension (cN/ dtex) | Time period (second) | Single fiber fineness (dtex) | Strength (mN/tex) | Elastic modulus 300/400 (GPa) |
|---|---|---|---|---|---|---|
| - | - | - | - | 2.82 | 1340 | 73 |
| 1 | 425 | 0.2 | 24 | 2.62 | 1284 | 100 |
| 2 | 425 | 0.6 | 24 | 2.64 | 1280 | 111 |
| 3 | 425 | 1.1 | 24 | 2.62 | 1298 | 123 |
| 4 | 450 | 0.2 | 24 | 2.6 | 1314 | 103 |
| 5 | 450 | 0.6 | 24 | 2.6 | 1354 | 116 |
| 6 | 450 | 1.1 | 24 | 2.58 | 1363 | 125 |
| 7 | 475 | 0.2 | 24 | 2.58 | 1341 | 104 |
| 8 | 475 | 0.6 | 24 | 2.6 | 1395 | 7.18 |
| 9 | 475 | 1.1 | 24 | 2.58 | 1372 | 128 |
| 10 | 500 | 0.3 | 24 | 2.56 | 1352 | 104 |
| 11 | 500 | 0.6 | 24 | 2.54 | 1347 | 123 |
| 12 | 500 | 1.0 | 24 | 2.52 | 1383 | 136 |

Comparative Example 1

(Polymerization and spinning of PBO using phosphoric acid)

7 Parts by weight of 4,6-diamino-1,3-benzenediol dihydrochloride was dissolved in 33 parts by weight of water that had been degassed with nitrogen. 5.3 Parts by weight of terephthalic acid was dissolved in 64 parts by weight of a 1 molar sodium hydroxide aqueous solution, followed by degassing with nitrogen. The 4,6-diamino-1,3-benzenediol dihydrochloride aqueous solution was dropwise added to the terephthalic acid disodium salt aqueous solution over 10

minutes, to form a white precipitate of 4,6-diamino-1,3-benzenediol/terephthalic acid salt. In this case, the reaction temperature was maintained at 90°C. The thus-obtained salt was filtered, dispersed in, and mixed with, 3,000 parts by weight of water that had been degassed with nitrogen, and the mixture was again filtered. The procedures of the above dispersing, mixing and filtering were repeatedly carried out three times. A fiber was taken up from the resultant polymer dope at a rate of 50 m/minute in a washing bath of ion-exchanged water. The remaining dope was extruded into a coagulating bath of ion-exchanged water through a cap having one hole having a diameter of 0.2 mm at a rate of 2.0 g/minute while the dope temperature was maintained at 180°C. The distance from the cap surface to the coagulating bath was adjusted to 20 cm. A fiber formed by the extrusion was taken up at a rate of 50 m/minute in the washing bath of ion-exchanged water, washed with warm water at 70°C for 3 hours, neutralized in a 0.8 wt% sodium hydroxide aqueous solution and then washed with warm water at 70°C for 3 hours to give a filament. The thus-obtained filament had a phosphorus atom content of 8,000 ppm.

Effect of the Invention

The fiber of this invention is formed of an aromatic polyazole and excellent in mechanical properties such as elastic modulus, strength and the like. The fiber of this invention has little content of a phosphorus compound and is excellent in hydrolysis resistance of the aromatic polyazole.

According to the production process of this invention, further, a fiber formed of an aromatic polyazole can be produced without using a phosphorus compound such as polyphosphoric acid. According to the production process of this invention, an acidic solvent is used, but there is an advantage that the acidic solvent can be easily removed by washing with water and has little possibility of remaining in the fiber. Further, the process of this invention also has an advantage that a residual solvent can be removed by washing with water for a short period of time.

Industrial Utility

The fiber of this invention can be applied to ropes, belts, insulating fabrics, reinforcement materials for resins, protective clothes and the like.

## Claims

1. A fiber formed of a polyazole having a recurring unit of the following formula (I),

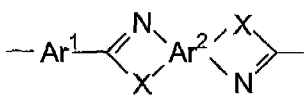

(I)

wherein $Ar^1$ is a divalent aromatic group having 4 to 20 carbon atoms, $Ar^2$ is a tetravalent aromatic group having 4 to 20 carbon atoms and each X is O, S or NH,
and having a phosphorus atom content of 30 ppm or less.

2. The fiber of claim 1, wherein the polyazole contains 5 to 100 mol% of the recurring unit of the following formula (I),

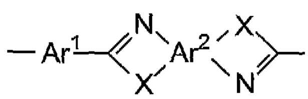

(I)

wherein $Ar^1$ is a divalent aromatic group having 4 to 20 carbon atoms, $Ar^2$ is a tetravalent aromatic group having 4 to 20 carbon atoms and each X is O, S or NH,
and 95 to 0 mol% of a recurring unit of the following formula (II),

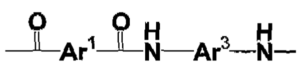

(II)

wherein $Ar^1$ is a divalent aromatic group having 4 to 20 carbon atoms and $Ar^3$ is a divalent aromatic group having

4 to 20 carbon atoms.

3. The fiber of claim 2, wherein the polyazole contains 10 to 100 mol% of the recurring unit of the formula (I) and 90 to 0 mol% of the recurring unit of the formula (II).

4. The fiber of claim 2, wherein the polyazole contains 50 to 100 mol% of the recurring unit of the formula (I) and 50 to 0 mol% of the recurring unit of the formula (II).

5. The fiber of claim 2, wherein each of $Ar^1$ in the formula (I) and $Ar^1$ in the formula (II) is independently selected from the group consisting of

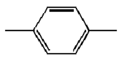 ,

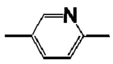 , 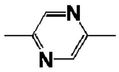 , 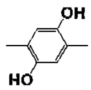 and 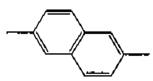 .

6. The fiber of claim 2, wherein $Ar^2$ in the formula (I) is selected from the group consisting of

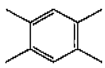 , 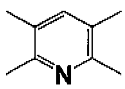 and 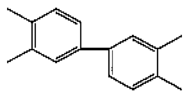 .

7. The fiber of claim 2, wherein $Ar^3$ in the formula (II) is selected from the group consisting of

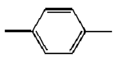 ,

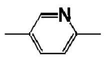 , 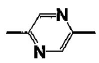 and 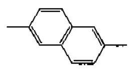 .

8. The fiber of claim 2, wherein $Ar^1$ in the formula (I) is

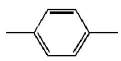 ,

$Ar^2$ in the formula (I) is

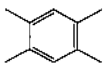

or

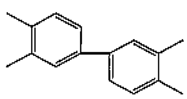

and each X in the formula (I) is O.

**9.** The fiber of claim 2, wherein $Ar^3$ in the formula (II) is

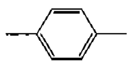

**10.** The fiber of claim 1, which has an elastic modulus of 70 GPa or more.

**11.** The fiber of claim 1, which has an orientation coefficient F, determined by the following expressions (III), of 0.3 or more,

$$< \cos^2 \phi > = \frac{\int_0^{\pi/2} I(\phi) \cos^2 \phi \sin \phi d\phi}{\int_0^{\pi/2} I(\phi) \sin \phi d\phi}$$

$$F = \frac{3 < \cos^2 \phi > -1}{2} \qquad \text{(III)}$$

Wherein $\phi$ is an azimuth angle in X-ray diffraction measurement and I is a diffraction intensity of X-ray.

**12.** A process for the production of a fiber, which comprises spinning a fiber from a dope containing a polyamide and an acidic solvent and having a polyamide concentration of 5 % by weight or more, the polyamide containing a recurring unit of the following formula (I-a),

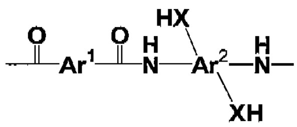
(I − a)

wherein $Ar^1$ is a divalent aromatic group having 4 to 20 carbon atoms, $Ar^2$ is a tetravalent aromatic group having 4 to 20 carbon atoms and each X is O, S or NH,
and having an inherent viscosity ($\eta_{inh}$) of 1 or more, coagulating the spun fiber in a coagulating liquid and heat-treating the thus-obtained fiber at 200 to 900°C.

**13.** The process of claim 12, wherein the polyamide contains 5 to 100 mol% of the recurring unit of the following formula (I-a),

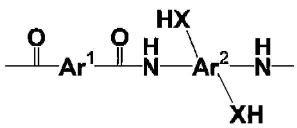
(I − a)

wherein $Ar^1$ is a divalent aromatic group having 4 to 20 carbon atoms, $Ar^2$ is a tetravalent aromatic group having 4 to 20 carbon atoms and each X is O, S or NH,
and 95 to 0 mol% of a recurring unit of the following formula (II),

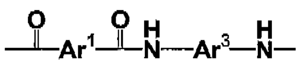
(I I)

wherein $Ar^1$ is a divalent aromatic group having 4 to 20 carbon atoms and $Ar^3$ is a divalent aromatic group having 4 to 20 carbon atoms.

**14.** The process of claim 13, wherein the polyamide contains 10 to 100 mol% of the recurring unit of the formula (I-a) and 90 to 0 mol% of the recurring unit of the formula (II).

**15.** The process of claim 13, wherein the polyamide contains 50 to 100 mol% of the recurring unit of the formula (I-a) and 50 to 0 mol% of the recurring unit of the formula (II).

**16.** The process of claim 13, wherein each of $Ar^1$ in the formula (I-a) and $Ar^1$ in the formula (II) is independently selected from the group consisting of

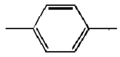 , 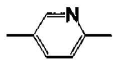 , 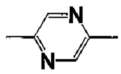 , 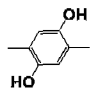

and

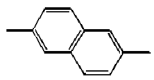 .

**17.** The process of claim 13, wherein $Ar^2$ in the formula (I-a) is selected from the group consisting of

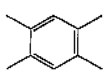 , 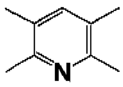 and 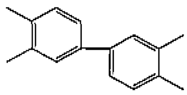 .

**18.** The process of claim 13, wherein $Ar^3$ in the formula (II) is selected from the group consisting of

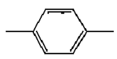 , 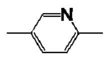 , 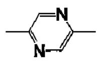 and 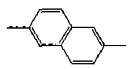 .

**19.** The process of claim 13, wherein $Ar^1$ in the formula (I-a) is

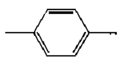 ,

$Ar^2$ in the formula (I-a) is

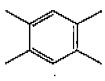 or 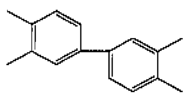

and each X in the formula (I-a) is O.

**20.** The process of claim 13, wherein $Ar^3$ in the formula (II) is

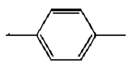 .

**21.** The process of claim 12, wherein the dope exhibits optical anisotropy.

**22.** The process of claim 12, wherein the acidic solvent is fuming sulfuric acid, sulfuric acid, methanesulfonic acid or an aqueous solution of any one of these.

**23.** The process of claim 12, wherein the polyamide has a concentration of 10 % by weight or more.

**24.** The process of claim 12, wherein the polyamide has a concentration of 15 to 30 % by weight.

**25.** The process of claim 12, wherein the coagulating liquid is an aqueous solution of sulfuric acid or methanesulfonic acid or water.

**26.** The process of claim 12, wherein the heat treatment is carried out under tension.

**INTERNATIONAL SEARCH REPORT**

International application No.
PCT/JP2006/322404

A. CLASSIFICATION OF SUBJECT MATTER
*D01F6/74*(2006.01)i, *C08G73/18*(2006.01)i, *C08G73/22*(2006.01)i, *D01F6/60*(2006.01)i

According to International Patent Classification (IPC) or to both national classification and IPC

B. FIELDS SEARCHED

Minimum documentation searched (classification system followed by classification symbols)
D01F6/74, C08G73/18, C08G73/22, D01F6/60

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 1-141920 A (Teijin Ltd.),<br>02 June, 1989 (02.06.89),<br>All references<br>(Family: none) | 1,10,11<br>2-9 |
| X<br>A | JP 2003-171823 A (Toyobo Co., Ltd.),<br>20 June, 2003 (20.06.03),<br>All references<br>(Family: none) | 1,10,11<br>2-9 |
| X<br>A | WO 94/04726 A1 (THE DOW CHEMICAL CO.),<br>03 March, 1994 (03.03.94),<br>All references<br>& JP 8-510791 A & US 5273703 A<br>& US 5411694 A & EP 655092 A<br>& CN 1087138 A & CA 2142279 A | 1,10,11<br>2-9 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 January, 2007 (18.01.07) | 30 January, 2007 (30.01.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/322404

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2-84511 A (Mitsui Petrochemical Industries, Ltd.),<br>26 March, 1990 (26.03.90),<br>All references<br>(Family: none) | 1,10,11<br>2-9 |
| E,A | JP 2006-348442 A (Toyobo Co., Ltd.),<br>28 December, 2006 (28.12.06),<br>All references<br>(Family: none) | 1-11 |
| A | JP 43-2475 B1 (Toyo Rayon Kabushiki Kaisha),<br>29 January, 1968 (29.01.68),<br>Example 4<br>(Family: none) | 1-26 |
| A | JP 61-97354 A (Kabushiki Kaisha Ishida Koki Seisakusho),<br>15 May, 1986 (15.05.86),<br>All references<br>(Family: none) | 12-26 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 3047543 A
- JP 5112639 A
- JP 432475 B
- GB 1142071 A
- JP 2004107621 A

### Non-patent literature cited in the description

- **J.H. CHANG ; K.M. PARK ; I.C. LEE.** *Polymer Bulletin,* 2000, vol. 44, 63